Europäisches Patentamt

European Patent Office

Office européen des brevets

(19)

(11) **EP 1 717 753 A2**

(12) **EUROPEAN PATENT APPLICATION**

(43) Date of publication:
**02.11.2006 Bulletin 2006/44**

(51) Int Cl.:
*G06T 1/60* (2006.01)

(21) Application number: **06112972.2**

(22) Date of filing: **24.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.04.2005 US 119154**

(71) Applicant: **STMicroelectronics S.r.l.**
**20041 Agrate Brianza (Milano) (IT)**

(72) Inventors:
• **Spampinato, Giuseppe**
  **95121, Catania (IT)**
• **Capra, Alessandro**
  **95030, Gravina di Catania (IT)**
• **Pappalardo, Francesco**
  **95047, Paternò (IT)**

(74) Representative: **Pellegri, Alberto et al**
**c/o Società Italiana Brevetti S.p.A.**
**Piazza Repubblica, 5**
**21100 Varese (IT)**

(54) **Software implemented image generating pipeline using a dedicated digital signal processor**

(57)    An image generating pipeline (IGP) includes a digital signal processor for implementing processing blocks connected in cascade for processing an input image that includes an array of raw pixel values to generate a color image that includes an array of reconstructed pixel values. A memory is coupled to the digital signal processor for storing the raw pixel values and the array of reconstructed pixel values. The digital signal processor includes a data cache, and the raw pixel values of the input image are processed through the processing blocks in sub-arrays having fractional dimensions of the pixel dimensions of the whole image array. The sub-arrays include an input sub-array of pixel values being loaded from the memory for defining a working window. The sub-arrays of raw pixel values have a row-wise dimension of at least a fraction of a full row of the input image, and a column-wise dimension equal to or larger than a column-wise filtering action of a respective processing block to which the input sub-array is input. The digital signal processor outputs at least one fraction of full rows of completely reconstructed pixel values of the input image for storing in the memory.

**FIG. 4**

EP 1 717 753 A2

## Description

### Field of the Invention

The present invention relates to image acquisition and image data processing methods and devices. More particularly, the present invention relates to a software implemented image generating pipeline (IGP) generating high quality color images from data produced by an image sensor using a dedicated digital signal processor (DSP).

### Background of the Invention

Generally, when using a video camera or a digital still camera to photograph a color image, the incident light passes through filters for extracting certain wavelength components, such as the basic color components R (red), G (green) and B (blue). In a two-dimensional imaging, the imaging unit is composed of many pixels arranged in the vertical and horizontal directions. Each pixel of the two-dimensional image contains either red, green or blue color light because of the filtering of the incident light.

According to one of several alternative techniques, the type of filter is changed for every pixel and the filters are cyclically aligned in the order: R, G, B, R, G, B in the horizontal direction, thus defming the color of the pixels aligned on a horizontal row of the pixel array of the sensor.

As a consequence, information of the photographed colored object is obtained only once every three pixels. In other words, an object cannot be color photographed other than in units of three pixels.

To reconstruct all the pixels of the two-dimensional image of the photographed object, it is necessary to interpolate color pixel data to obtain the color components of red, green and blue color using information contained in neighboring pixels of the pixel to be reconstructed/enhanced.

Generally, a value corresponding to the interpolated pixel is reconstructed by averaging corresponding values of a plurality of pixels surrounding the location of the pixel to be interpolated. Alternatively, the interpolated pixel may be determined by averaging the values of the pixels remaining after discarding pixels of maximum and minimum values of the neighbor pixels of the pixel to be interpolated. Also well known are techniques for detecting an edge of a photographed object by analyzing the pixels surrounding the considered cluster.

U.S. Patent No. 5,373,322; U.S. Patent No. 5,053,861; U.S. Patent No. 5,040,064; U.S. Patent No. 6,642,962; U.S. Patent No. 6,570,616; U.S. published Patent Application No. 2003/0053687; U.S. Published Patent Application No. 2003/0007082; U.S. published Patent Application No. 2002/0101524; U.S. Patent No. 6,366,694; European Patent Publication No. 0 497 493; European Patent Publication No. 1 176 550; and European Patent Publication No. 1 406 447 disclose techniques that are employed in image processing.

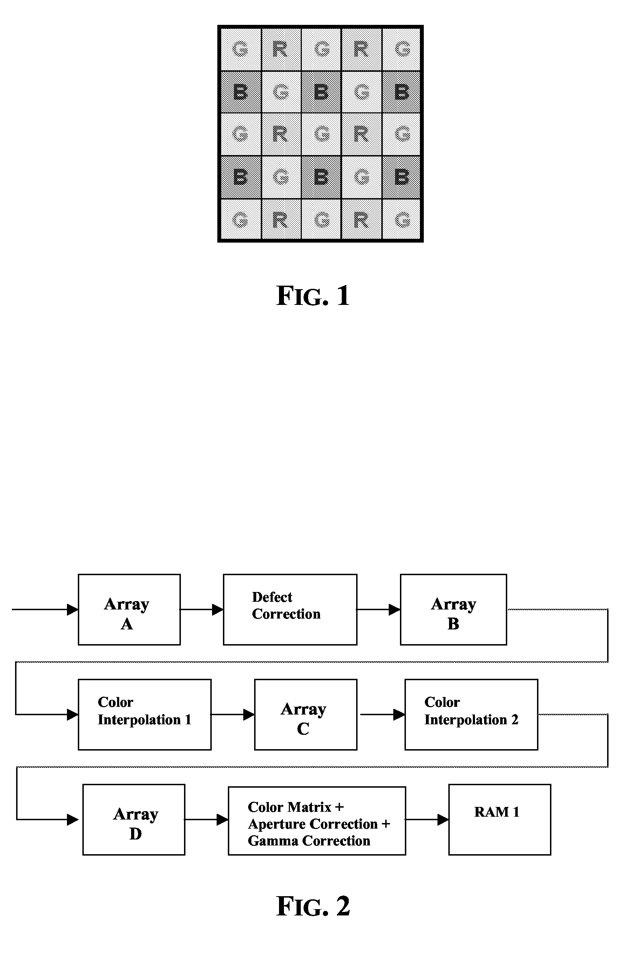

Generally, the data is acquired by the sensor according to a special pattern, such as the Bayer color-filter array (CFA) for example, the pattern of which is shown in Figure 1. This pattern is characterized by associating just one of the three basic color components to each pixel. Therefore, a good quality RGB image is obtained through a specific image processing sequence implemented in an image generation pipeline (IGP) to generate a high quality color image. Generally, in cascade to such an image processing subsystem is associated a data compressing block for reducing the band necessary for transmitting the color reconstructed image from the image processing subsystem or mass storage support, or to a remote receiver or display unit. The image generation pipeline may alternatively be hardware implemented in the form of an integrated accelerating device, or be software implemented using a dedicated DSP.

In any case, the IGP core (whether implemented in hardware or via software by the use of a dedicated DSP) utilizes a RAM in which storage buffers for input data (for example, Bayer data), intermediate processed image data if necessary, and eventually fully processed output image data may be organized as required. Of course, access to the RAM, external to the IGP core takes place ordinarily through a data bus.

Input data, for example an image pixel array with a Bayer pattern arrangement, as generated by a digital sensor, clearly represents a gross approximation of the color components of the reproduced scene. It is very important that the accuracy of the color reconstruction via interpolation algorithms be performed on the raw data acquired by the digital sensor.

Figure 2 illustrates a basic block diagram of a state-of-the-art core of a software image generating pipeline implemented by a DSP for processing raw image data as acquired by a digital sensor according to a Bayer pattern to produce a high quality image. The image is to be eventually compressed by the CODEC block either in a JPEG format or in an MPEG4 format or another similar format for storing the image or transmitting it. The algorithms carried out by the IGP pipeline are described below.

Defect Correction: The function of the block Def Corr is to correct various sensor damages resulting in the failure of single pixels. For the majority of applications, it renders tolerable the use of sensors having a total number of single pixel defects below a certain limit. Def Corr has a 5x5 filtering action causing the loss of four rows and four columns of the input array of pixels.

Color Interpolation 1: The function of the block Col Int 1 is to reconstruct RGB information for each pixel from the Bayer pattern data. Col Int 1 has a 5x5 filtering action causing the loss of four rows and four columns of the array of pixels produced by Def Corr.

Color Interpolation 2: The function of the block Col Int2 is that of a low-pass filter. It receives the RGB pattern pixels output by the preceding processing step and outputs RGB pixels of enhanced definition. Col Int 2 has a 3x3 filtering action causing the loss of two rows and two columns of the pixel array produced by Col Int 1.

Color Matrix + Aperture Correction + Gamma Correction: The functions of the components of this composite processing block may be recalled as follows.

Col Mat improves color rendition and color saturation of the image. In particular, it corrects the spectral sensitivities of the imaging sensor for enhancing chromaticity of the display in consideration of the characteristics of human sight. Col Mat does not produce the loss of any row or column of pixels.

Ap Corr corrects out-of-focus appearance caused by a weighed average processing by locally enhancing contrast at contours. Ap Corr has a 3x3 filtering action, therefore it determines the loss of two rows and two columns of pixels.

Gamma correction compensates display characteristics of monitors. This is done by using a LUT (look-up-table) that can be effectively used to simultaneously correct brightness. The Gamma correction does not cause the loss of any row or column.

Therefore, the combined processing block has a filtering action that causes a total loss of two rows and two columns of the array D. The IGP produces a total loss of twelve rows and twelve columns of the input array.

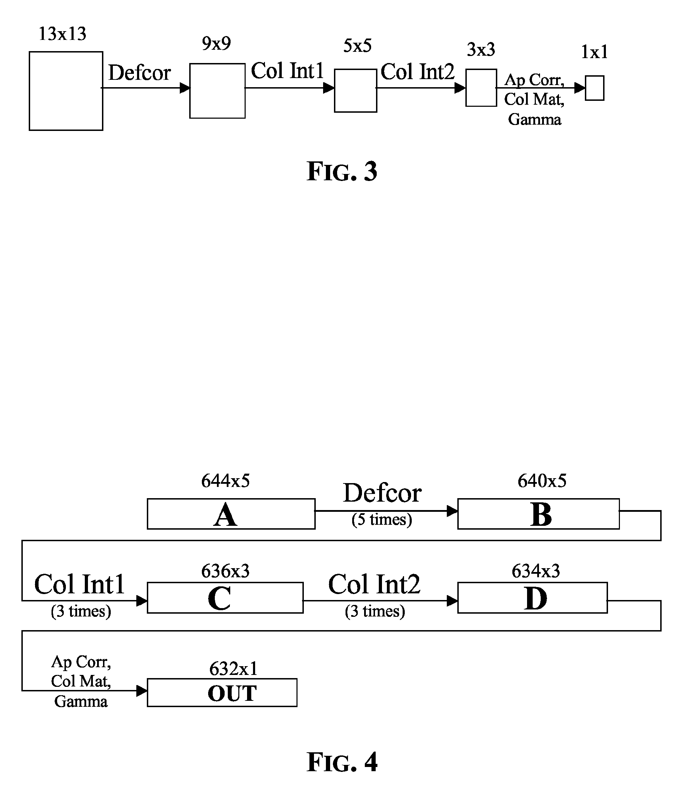

Considering that the data cache of a dedicated DSP can hardly contain a full image array, it is common practice to implement the IGP to perform the above mentioned sequential algorithms. This is done by processing blocks of raw input Bayer pattern data of dimensions such that, in consideration of the succession of filtering actions, the processing pipeline outputs a fully reconstructed single pixel of the real image (typically the central pixel of the input block of pixels fed to the IGP), as represented in the flow chart of Figure 3.

The IGP, in consideration of the total losses of twelve rows and twelve columns, reconstructs directly one pixel of the fmal image by reading a 13x13 input array (block) of Bayer pixels from the external RAM. Practically, the 13x13 "working window" scans in a raster mode the whole image array stored in the RAM, reconstructing pixel-by-pixel the output image array. This is apart from losing twelve rows and twelve columns that may be eventually added as copies of the first and last reconstructed row and column, or pseudo-reconstructed using adjacent pixel values.

Assuming, for evaluation purposes, that a sensor for VGA format (640x480) commonly produces a 644x484 pixel array, the IGP process includes the following steps:

1. An input array A (13x13) of the Bayer pattern data to be loaded in the cache from the actual RAM is initialized;

2. An output array B [9 x 9] of Def Cor is initialized;

3. An output array C [(5x3) x 5] of Col Int 1 is initialized;

4. An output array D [(3x3) x 3] of Col Int 2 is initialized;

5. The first 13 columns (from row 0 to 12) are loaded from the external RAM in the DSP cache as a first input array A of the IGP;

6. Def Corr is applied to generate a column corresponding to the A-columns 2...10 (rows 2...10) for reconstructing the first pixel of each row. For reconstructing the other pixels, Def Corr is applied in succession to the eleven A-columns 2....10 (rows 2...10) and the output values are stored in the nine B-columns.
To avoid overwriting of processed data a left shifting of array B is done at each completion of a column.

7. Col Int 1 is applied to generate columns corresponding to the B-columns 2...6 (rows 2...6) and the results are stored in the five C-columns. To avoid overwriting already processed data, a left shifting of array C is done at every completion of a column.

8. Col Int 2 is applied to generate columns corresponding to the C-columns 1...3 (rows 1...3) and the results are stored in three D-columns. To avoid overwriting already processed data, a left shifting of array D is done at every completion of a column.

9. Ap Corr, Col Mat and Gamma are applied to generate a pixel corresponding to the central pixel of the array D and the fully reconstructed pixel value is stored in the external RAM.

10. The process advances, by shifting to the left the columns of the A array and loading from the RAM the next column (13) of the Bayer pattern until the end of the first row.

11. Thereafter, a new starting block of pixels (13x13) of the Bayer pattern (columns 0.....12 and rows 1......13) is loaded in the cache to continue the processing for reconstructing pixel-by-pixel and writing it in the external RAM the second row, and so forth until completing the raster scanning of the whole array of Bayer data of the input image.

The fmal image is 632x472 pixels.

Summarizing: readings from the external RAM:

$$\{[(13) \text{x} 316] \text{x} 472\} + (12 \text{x} 13) \text{x} 472 \ = \ 1.938.976$$

pixel (using the 12 previous read columns);

Writings in the external RAM: (632 x 472) = 298,304 pixels (1 pixel = 16 bit);

- Rows: (484 - 12) = 472;

- Steps for row: [(644-12)] = 632

- Total numbers of pixels used for the processing:

    - Def Corr: {[1x9x 632]x472 + 9x12x472} = 2.735.712 pixels;

    - Col Int 1: {[(1x5x632]x472 + 4x5x472} = 1.500.960 pixels;

    - Col Int 2: {[1x(3 x 3) x 632]x472 + 2x(2x3)x472} = 1.491.520 pixels;

- Ap Corr, Col Mat, Gamma: (632x472) = 298.304 pixels;

- Total number of output pixels: 298,304;

- Arrays shifts:

    - A: 12x13x632x472 = 46.535.424;

    - B: 8x9x632x472 = 21.477.888;

    - C: 4x5x632x472 = 5.966.080;

    - D: 2x3x632x472 = 1.789.824;

    - memory space required to store the intermediate arrays:

$$\{(13 \text{ x } 13) + [9 \text{ x } 9] + [(5 \text{ x } 3) \text{ x } 5] + [(3 \text{x } 3) \text{ x } 3]\} \text{ x } 16 \text{ bit} = 2{,}8 \text{ KB.}$$

Advantages: by reconstructing pixel-by-pixel the real image D-cache misses are relatively few because relatively small pixel arrays of data are processed by the IGP in succession.

Disadvantages: computational overhead is very large because for each output pixel, the block Def Corr must calculate 9 pixels, the block Col Int 1, 5 pixels and the block Col Int 2, 3 pixels.

Overhead for the three blocks is:

- Def Corr: 900%

- Col Int 1:500%;

- Col Int 2: 300%;

Data overhead (number of read accesses to the RAM) is also very large.

According to present state-of-the art fabrication technologies of integrated IGP core devices, the dedicated DSP, integrated in the IGP core device, has a data cache (D-cache) of relatively small capacity, often of 32 KB and hardly larger than 64 KB. Therefore, the classical approach of processing relatively small sub-arrays (blocks) of pixels, as depicted in the flow chart of Figure 3, has been regarded as the sensible choice to minimize D-cache miss events. This is in consideration of the fact that the very small dimensions of pixel arrays (e.g., 13x13) that are initialized for generating a fully processed output pixel of the reconstructed real image, are comfortably contained in the D-cache of the DSP executing the sequence of processing algorithms on intermediate pixel arrays of progressively reduced dimensions (9x9, 5x5, 3x3).

As noted above, the penalties of such a raster mode approach in processing raw input data are a large computational overhead, and a large data retrieval overhead (large number of accesses to the external RAM).

The alternative approach of generating intermediate full image arrays, for example of VGA format, would not improve the situation because in this case whole image arrays would not be entirely contained in the D-cache of the DSP leading to an unacceptable increase of D-cache stalls. By simulating such an alternative approach a 17% increase of D-cache misses over the theoretically total D-cache cycles was observed.

### Summary of the Invention

A significant advantage in terms of reducing total overhead burden in IGP processing, via software using a dedicated DSP, an array of raw pixel values of an image may be attained by processing by sub-arrays composed of either full rows or portions of rows of the pixel array of the whole image for outputting one or more reconstructed full row of pixels or one or more reconstructed portions of rows of pixels. This is provided that the initialized column-wise dimension of the sub-array is chosen as to be equal or larger than the largest column-wise filtering action of the first IGP processing block.

According to a preferred embodiment, the IGP processing sequence is performed on sub-arrays of an even number of half rows (for example, left hand side halves or right hand side halves) or portions of rows such that the data of all the pixels composing the half or portion of a row are accommodated in a row of the data cache of the DSP.

Aspects and advantages of the present invention will become clearer in the ensuing description of several embodiments, making reference to the attached drawings.

### Brief Description of the Drawings

**Figure 1** illustrates a Bayer color filter array pattern according to the prior art.

**Figure 2** is a functional diagram of a software implemented IGP employing a dedicated DSP according to the prior art.

**Figure 3** is a flow chart of IGP processing by blocks of pixels based upon a common raster mode IGP processing according to the prior art.

**Figure 4** depicts a flow chart of IGP processing by full rows according to a first embodiment of the invention.

**Figure 5** depicts a flow chart of IGP processing by half rows according to a second embodiment of the invention.

**Figure 6** depicts a flow chart of IGP processing by an even number of half rows according to an alternative preferred embodiment of the invention.

**Figure 7** depicts a flow chart of IGP processing by an even number of half rows with enhanced border reconstructions according to a further embodiment of the invention.

### Detailed Description of the Preferred Embodiments

For comparison purposes with the prior art methods, the analysis of the performance of different embodiments of the method of the invention will be made for the same VGA format of images. Of course, the invention applies also to IGP processing of images of other standard or non-standard formats.

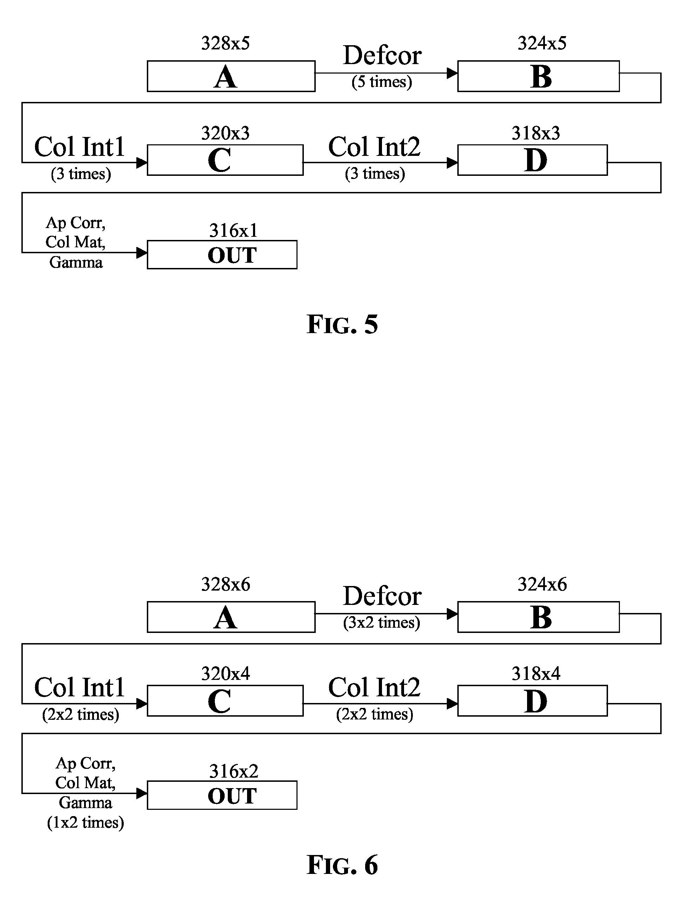

According to a first embodiment, the processing flow chart is as depicted in Figure 4 for VGA format. The process flow chart of Figure 4 is to some extent similar to that of Figure 3, but the dimensions of the starting array of raw pixel data (a sub-array of the full image array of Bayer data) that is loaded in the D-cache (data cache) of the DSP to be sequentially processed through the IGP is significantly different.

According to this first embodiment, the sequentially executed IGP algorithms process the pixel data of an input sub-array A that is constituted by five full rows of pixels of the array of Bayer pattern pixel data produced by the digital sensor. At the conclusion of every cycle, a row of fully processed pixels is generated without carrying out any row scan and repeated accesses to the external RAM.

As will be quantitatively demonstrated in the following analyses, the general approach of processing rows of the Bayer data array to produce rows of fully reconstructed image pixels significantly reduces both computational overhead and RAM access overhead compared to a classical raster IGP processing by block of pixels as depicted in the flow chart of Figure 3, though using a DSP with a data cache of the same size.

With reference to the flow chart of Figure 4, the IGP process includes the following steps:

1. An input array A (644x5) of the Bayer pattern data to be loaded in the cache from the external RAM is initialized.

2. An output array B (640x5) of Def Cor is initialized.

3. An output array C [(636x3) x 5] of Col Int 1 is initialized.

4. An output array D [(634x3) x 5] of Col Int 2 is initialized.

5. The pixel values of the first five rows (0...4), from column 0 to column 643, are loaded from the external RAM in the DSP data cache as a first input array A of the IGP.

6. Def Corr is applied to the input array A to generate a row corresponding to the central row (2) of the input array A from columns 2....641 and the processed row is stored as the first row of the B array (640x5). For reconstructing the other two rows of array B, the array A is up-shifted by one row and a new bottom row (new fifth row of the five row input array A) is loaded from the external RAM. Def Corr is executed again producing a second row of array B. After five cycles a first array B (640x5) will be completed.

7. Col Int 1 is applied to the completed array B to generate a row corresponding to the central row (2) of the array B, from columns 2....637, and the processed row is stored as the first row of array C (636x3). For reconstructing the other two rows of array C, the B array is up-shifted by one row and a new row of B array, as generated by Def Corr, is added as the new bottom row of the up-shifted array B. After three cycles, a first array C (636x3) will be completed.

8. Col Int 2 is applied to the completed array C to generate a row corresponding to the central row (1) of the array C, from columns 1.....635, and the processed row is stored as the first row of array D (634x3). For reconstructing the other two rows of array D, array C is up-shifted by one row and a new row of the C array, as generated by Col Int 1, is added as the new bottom row of the up-shifted C array. After three cycles, the array D (634x3) will be completed.

9. Ap Corr, Col Mat and Gamma are applied to the completed array D to generate a row corresponding to the central row (1) of the D array and the fully reconstructed row of pixel values is stored in the external RAM.

10. The process advances by continuing the shifting up by one row the working window represented by the input array A (644x5) and loading from the RAM a new row until completing the reconstruction and writing in the RAM of the pixel values of all the rows of the output image.

The output image is 632x472 pixels.

Summarizing:

-   Readings from the external RAM: 644x484 = 311.696 pixels;

-   Writings in the RAM: (632 x 472) = 298,304 pixels;

-   Total number of pixels used for the processing is as follows:

    -   Def Corr: {[640x480] } = 307.200 pixels;

    -   Col Int 1: {[636 x 476]} = 302.736 pixels;

    -   Col Int 2: {634 x 474} = 300.516 pixels;

    -   Ap Corr, Col Mat, Gamma: {[316 x 472]x2} = 298.304 pixels;

- Total number of output pixels: 298,304;

- Arrays shifts:

  - A: 644x479*4 = 1.233.904;

  - B: 640x635x4 = 1.216.000;

  - C: 636x473x4x3 = 3.609.936;

  - D: 634x471x4x3 = 3.583.368;

  - memory space required to store the intermediate arrays:

    - A: 644x5=3220 pixels

    - B: 640x5=3200 pixels

    - C: 636x3x3=5724 pixels

    - D: 634x3x3=5706 pixels

    - Total cache memory required = 35KB (1 pixel = 2 bytes).

Advantage: one fully reconstructed row of the real image is generated at every cycle. This results in no overhead calculations; and a reduced number of readings and writings from and to the RAM. Disadvantage: requires at least a 35 KB cache memory for storing intermediate arrays.

To reduce the required size of the data cache memory an input array (working window) of 328x5 pixels that is a sub-array of five half rows (VGA) may be used instead of a sub-array of five full rows, accounting in this case for a small computational overhead.

According to this alternative embodiment depicted in the flow-chart of Figure 5, the process includes the following steps:

1. An input array A (328x5) of the Bayer pattern data to be loaded in the cache from the external RAM is initialized.

2. An output array B (324x5) of Def Cor is initialized.

3. An output array C [(320x3) x 5] of Col Int 1 is initialized.

4. An output array D [(318x3) x 5] of Col Int 2 is initialized.

5. The pixel values of the first five rows (0...4), from column 0...327, are loaded from the external RAM in the DSP data cache as a first input array A of the IGP.

6. Def Corr is applied to the input array A to generate a row corresponding to the central row (2) of the input array A from columns 2....325 and the processed row is stored as the first row of the B array (324x5). For reconstructing the other two rows of array B, the array A is up-shifted by one row and a new bottom half row (new fifth row of the five row input array A) is loaded from the external RAM. Def Corr is executed again producing a second row of array B. After five cycles a first array B (324x5) will be completed.

7. Col Int 1 is applied to the completed array B to generate a row corresponding to the central row (2) of the array B, from columns 2....321, and the processed row is stored as the first row of array C (320x3). For reconstructing the other two rows of array C, the B array is up-shifted by one row and a new row of B array, as generated by Def Corr, is added as the new bottom row of the up-shifted array B. After three cycles, a first array C (320x3) will be completed.

8. Col Int 2 is applied to the completed array C to generate a row corresponding to the central row (1) of the array C, from column 1.....318, and the processed row is stored as the first row of array D (318x3). For reconstructing the other two rows of array D, array C is up-shifted one row and a new row of the C array, as generated by Col Int 1, is added as the new bottom row of the up-shifted C array. After three cycles, the array D (318x3) will be completed.

9. Ap Corr, Col Mat and Gamma are applied to the completed array D to generate a row corresponding to the central row (1) of the D array and the reconstructed row of pixel values is stored in the external RAM.

10. The process advances by continuing the shifting up by one row the working window represented by the input array A (328x5) and loading a new half row from the RAM, until completing the reconstruction and writing in the RAM of the pixel values of all the half rows of the left half of the output image.

11. Thereafter, the process is repeated for the other (right hand side) half of the image, that is, (columns 316 to 643) in the same manner as done for the first half.

The output reconstructed image is 632x472 pixels.
Summarizing:

- Readings from the RAM: (328x484)x2 = 317.504 pixels;

- Writings in the RAM: (316 x 472)x2 = 298,304 pixels;

- Total number of pixels used for the processing is as follows:

  - Def Corr: {[324x480]x2 } = 311.040 pixels;

  - Col Int 1: {[320 x 476]x2} = 304.640 pixels;

  - Col Int 2: {[318 x 474]x2} = 301.464 pixels;

  - Ap Corr, Col Mat, Gamma: { [316 x 472]x2}= 298.304 pixels;

  - Output: 298,304 pixels;

  - Arrays shifts:

    - A: (328x479x4)x2 = 1.256.896;

    - B: (324x475x4)x2 = 1.231.200;

    - C: (320x473x4x3)x2 = 3.632.640;

    - D: (318x471x4x3)x2 = 3.594.672;

    - memory space required to store the intermediate arrays:

      - A: 328x5=1640 pixels

      - B: 324x5=1620 pixels

      - C: 320x3x3=2880 pixels

      - D: 318x3x3=2862 pixels

      - Total cache memory size required is 18KB (1 pixel = 2 bytes).

Advantage: requires a D-cache memory size of only 18KB. This is a relatively small number of readings and writings from and to the external RAM. Disadvantage: computational overhead is not null.

With a standard set-associative 32 KB size data cache having a row length of eight words of the dedicated DSP further enhanced results may be achieved by processing an even number of half-lines larger than the column-wise filtering action produced by the first processing block of the IGP.

For the example described, in consideration of the fact that the column filtering action of the first processing block (Def Cor) of the IGP is of five rows, six half rows instead of five as in the preceding examples are loaded as the input array A of the IGP, that is, using a sub-array (working window) of 328x6 pixels. This permits a significant reduction in the time taken by the calculations by allowing operation in a circular array mode, as will be illustrated in detail below.

Moreover, according to this embodiment, enhanced support from the data cache of the DSP is exploited. In fact, in a standard set-associative data cache with a row (line) length of eight words, the loading of each row of the initialized input array A may generate data-cache misses because the distance among addresses is greater than the data-cache row length, and in addition each data cache row is not fully exploited.

According to this preferred embodiment with an initialized 328x6 sub-array size, the data cache row is fully exploited with 126 data-cache locations accessed for a total of 1968 pixels.

According to this alternative embodiment depicted in the flow-chart of Figure 6, the process includes the following steps:

1. An input array A (328x6) of the Bayer pattern data to be loaded in the cache from the external RAM is initialized.

2. An output array B (324x6) of Def Cor is initialized.

3. An output array C [(320x4) x 3] of Col Int 1 is initialized.

4. An output array D [(318x4) x 3] of Col Int 2 is initialized.

5. The pixel values of the first six rows (0...5), from column 0...327, are loaded from the external RAM in the DSP data cache as a first input array A of the IGP.

6. Def Corr is applied to the first five rows of the input array A to generate a row corresponding to the row (2) of the input array A, from columns 2....325, and the processed row is stored as the first row (0) of the B array. Def Corr is applied a second time to the last five rows of the input array A to generate a second row corresponding to the row (3) of the input array A, from columns 2....325, and the processed row is stored as the second row (1) of the B array (324x6). For reconstructing another pair of rows of array B, the array A is up-shifted by two rows and two new bottom half rows (new fifth and sixth rows of the six row input array A) are loaded from the external RAM. Def Corr is executed again twice for producing a second pair of rows (2 and 3) of array B. After three cycles a first array B (324x6) will be completed.

7. Col Int 1 is applied to the first five rows of the completed array B to generate a first row corresponding to the row (2) of the array B, from columns 2....321, and the processed row is stored as the first row (0) of array C (320x4). Col Int 1 is applied a second time to the last five rows of the array B to generate a second row corresponding to the row (3) of the array B, from columns 2....321, and the processed row is stored as the second row (1) of the C array (320x4) For reconstructing the other two rows of array C, the B array is up-shifted by two rows and a new pair of rows of the B array, as generated by Def Corr, are added as the new bottom rows of the up-shifted array B. After applying again Col Int 1 twice, a first array C (320x4) will be completed.

8. Col Int 2 is applied to the first three rows of the completed array C to generate a first row corresponding to the row (1) of the array C, from columns 1....318, and the processed row is stored as the first row (0) of array D (318x4). Col Int 2 is applied a second time to the last three rows of the array C to generate a second row corresponding to the row (2) of the array C, from columns 1....318, and the processed row is stored as the second row (1) of the D array (318x4). For reconstructing the other two rows of array D, the C array is up-shifted by two rows and a new pair of rows of the C array, as generated by Col Int 1, are added as the new bottom rows of the up-shifted array C. After applying again Col Int 2 twice, a first array D (318x4) will be completed.

9. Ap Corr, Col Mat and Gamma are applied to the first three rows (0...2) of the completed array D to generate the first (0) fully reconstructed half row of the output image, and the Ap Corr, Col Mat and Gamma are applied a second time to the last three rows (1..3) of the D array to generate the second fully reconstructed half row (1) of the output image. The first pair of fully reconstructed half rows is stored in the external RAM.

10. The process advances by continuing the shifting up by two rows of the working window represented by the input array A (328x6) and loading two new half rows from the RAM, until completing the reconstruction and writing in the RAM of the pixel values of all the half rows of the left half portion of the output image.

After 240 cycles from the beginning, the first left half of the image is completely processed and stored in the RAM. The process is then repeated for the other half of the image, by loading in the data cache of the DSP the first six rows 0...5 (from column 316 to column 643) of the RAM as the new starting input array A of the IGP and repeating the same process already done on the left half of the image. As mentioned before, an additional improvement that is obtained with this preferred embodiment is the simplification and reliability of the manner in which the array shifts are implemented.

In general, provided the row length of the data cache of the DSP is sufficient to accommodate an input row of data, by using input and intermediate arrays with an even number of rows greater than the column-wise filtering action of the relative processing block of the IGP, a more efficient implementation of array shifts is achieved by the use of pointers to intermediate arrays. The array shifts are performed by simply updating relative pointers instead of shifting the pixel values, thus operating in a circular array mode.

For illustrating the algorithm, a six row array will now be considered (e.g., the input array A). Three initially set pointers will point respectively: A1' to the first row 0, A2' to the third row 2, and A3' to the fifth row 4 of the input six row array.

After having calculated a first row (or a first pair of rows according to the last embodiment) of array B, instead of shifting the input array data, the following operations are preferred: A1"=A2'; A2"=A3'; and A3"=A1', and the data of the first two rows are overwritten with those of the successive two rows loaded from the RAM. The calculations to generate another row (or a second pair of rows according to the last embodiment) will be done by accounting for the above shown change of the pointers, that is, the first two rows will be those pointed by A1" (rows 2 and 3), the successive two rows will be those pointed by A2" (rows 4 and 5) and the last two rows will be those pointed by A3" (rows 0 and 1).

Upon overwriting again the first two rows, the pointers will be changed as follows: A1'''=A2"; A2'''=A3"; and A3'''=A1", and two new rows will overwrite those pointed by A3'''. Two new rows are introduced in the six row array in functionally correct positions which are not necessarily in the two bottom positions, thus avoiding the shifting of the array data. The same is done for the intermediate six row array B and also for the other two intermediate four rows arrays C and D.

In the above comparative description of IGP processing for a VGA format assuming a sensor generated Bayer data array of 644x484 pixels, the manner in which the missing eight border columns and eight border rows due to the filtering action of the IGP are reinstated to provide a standard VGA array of 640x480 pixels has not been discussed. As mentioned above, the missing rows and columns are often reintroduced as duplications of the inner processed column or row.

An enhanced border reconstruction may be implemented by coping the last two columns produced by that core to provide for an array B to be input to Col Int 1 incremented of two columns and by coping the last column produced by Col Int 2 twice to provide an input array D to Ap Corr, Col Mat and Gamma block incremented by two columns.

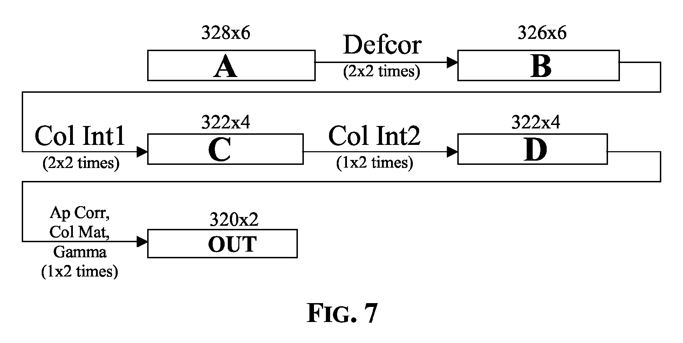

This is indicated in the flow chart of Figure 7, reproducing the flow chart of Figure 6, modified as described above to produce a standard VGA image array (640x480) at the output of the IGP. In this way, the reconstruction of the borders is significantly enhanced as compared to the replication of fully processed output columns and rows.

Simulation results carried out using the commercially available simulator ST220 will now be discussed. An IGP according to the last embodiment using an input array A (328x6) including the copying of the lost border pixels and a common raster IGP operating with blocks (13x13) and reconstructing a full image pixel array at every processing block of the IGP have been implemented in C language to compare performances with a DSP having a data cache of 32KB and with a DSP having a data cache of 64KB.

The results of the simulation are reported in the following tables.

**TABLE 1** (CORE CLOCK FREQUENCY: 400MHZ - PERIPHERAL CLOCK FREQUENCY: 166MHZ - I - CACHE 32K)

| IGP RASTER 32 KB D-CACHE | Branch Stalls | Dcache Stalls | Icache Stalls | Bundles | Cycles |
|---|---|---|---|---|---|
| Def Corr | 77444 | 988793 | 3071 | 21299267 | 22368575 |
| Col Int 1 | 77282 | 1769321 | 1221 | 7767160 | 9614984 |
| Col Int 2 | 77083 | 2690632 | 1517 | 4522937 | 7292169 |
| ApCorr, ColMat, Gamma | 38882 | 2970266 | 2035 | 7458036 | 10469219 |
| Main | 0 | 0 | 0 | 0 | 0 |
| CYCLES | 270691 | 8419012 | 7844 | 41047400 | 49744947 |

(continued)

| IGP RASTER 32 KB D-CACHE | Branch Stalls | Dcache Stalls | Icache Stalls | Bundles | Cycles |
|---|---|---|---|---|---|
| IGP RASTER 64KBD-CACHE | Branch Stalls | Dcache Stalls | Icache Stalls | Bundles | Cycles |
| Def Corr | 77444 | 952522 | 3071 | 21299267 | 22332304 |
| Col Int 1 | 77282 | 1768999 | 1221 | 7767160 | 9614662 |
| Col Int 2 | 77083 | 2686814 | 1517 | 4522937 | 7288351 |
| ApCorr, ColMat, Gamma | 38882 | 2814717 | 2035 | 7458036 | 10313670 |
| Main | 0 | 0 | 0 | 0 | 0 |
| CYCLES | 270691 | 8223052 | 7844 | 41047400 | 49548987 |
| IGP 328X6 32KB D-cache | Branch Stalls | Dcache Stalls | Icache Stalls | Bundles | Cycles |
| Def Corr | 78720 | 1369029 | 2627 | 21588000 | 23038376 |
| Col Int 1 | 39360 | 937687 | 1887 | 7246560 | 8225494 |
| Col Int 2 | 77436 | 981065 | 814 | 4460218 | 5519533 |
| ApCorr, ColMat, Gamma | 39360 | 2553598 | 1924 | 7429920 | 10024802 |
| Main | 2641 | 48599 | 2701 | 36443 | 90384 |
| Cycles | 237517 | 5889978 | 9953 | 40761141 | 46898589 |
| IGP 328X6 | Branch | Dcache | 64KB D-cache Stalls | Stalls Icache Stall Bundles | Cycles |
| Def Corr | 78720 | 617504 | 2627 | 21588000 | 22286851 |
| Col Int 1 | 39360 | 226895 | 1887 | 7246560 | 7514702 |
| Col Int 2 | 77436 | 213325 | 814 | 4460218 | 4751793 |
| ApCorr, ColMat, Gamma | 39360 | 1653792 | 1924 | 7429920 | 9124996 |
| Main | 2641 | 13041 | 2701 | 36443 | 54826 |
| Cycles | 237517 | 2724557 | 9953 | 40761141 | 43733168 |

**TABLE 2**

| | Cycles | Time (msec) | Improvement |
|---|---|---|---|
| IGP RASTER 32 KB D-cache | 49744947 | 124.4 | ----- |
| IGP RASTER 64 KB D-cache | 49548987 | 123.9 | 0.004 % |
| IGP 328X6 32KB D-cache | 46898589 | 117.2 | 5.722 % |
| IGP 328X6 64 KB D-cache | 43733168 | 109.3 | 12.085 % |

In TABLE 1 the different events are reported, and in particular, the bundle that corresponds to the total cycles minus the total stalls. The number of events is practically equal between the raster mode and the 328X6 mode (that is, the block mode and the half-row mode according to the invention), except for the Col Int 1 filter, due to specific software optimizations.

As may be observed from the results reported in TABLE 1, the raster mode IGP has an incidence of D-cache stalls (8.4 M cycles before a number of calculations of 49.7 M cycles), which is quite considerable. The total IGP cycles are independent of the size of the D-cache.

In contrast, with the method of the invention (with an input array of 328x6), about 5.7% improvement is achieved for the case of a 32 KB D-cache, and over 12% improvement is achieved with a 64 KB D-cache, as summarized in TABLE 2 above. The improvement is due to a significant reduction of D-cache stalls.

It may be objected that according to the preferred embodiments (328x6) of the method of the invention, the left part of the image will be processed for the right part and this fact could be non-ideal for the performance of eventual processing blocks following the IGP (for example, for a generic encoder).

Should these aspects be of concern, it may be obviated by transposing the input Bayer pattern (X) (644x484), generating the transposed Bayer pattern (Xt) (484x644) and by applying the IGP to the transposed Bayer data array (Xt).

In this case, using an input array A, that is, a sub-array of Xt of (248x6), the processing block following the IGP may immediately start to process the output pixel of the IGP.

Even by processing the transposed Xt Bayer data array, the method of the invention will reduce the number of calculation and RAM access overhead. On the other hand, by processing a rotated image, using an input array of 6x248, the data cache banks will not be fully exploited and data cache misses will increase.

In general, the use of an input array (328x6) will give overall better results in case of a process including several processing steps as an IGP.

In other words, the method of the invention may be defined as operating in a row-mode performs better than a common raster processing in a block-mode in all cases in which the processing chain is relatively long. That is, several processing steps are included, like an IGP processing a Bayer data array to produce RGB pixels. The block mode of operating remains valid in case of a relatively short processing chain including fewer processing steps in cascade.

## Claims

1.    A software implemented image generating pipeline comprising:

a digital signal processor for implementing a plurality of processing blocks connected in cascade for processing an input image comprising an array of raw pixel values to generate a color image comprising an array of reconstructed pixel values;
an external RAM for storing the raw pixel values and the array of reconstructed pixel values;
said digital signal processor comprising a data cache having a size less than a size necessary to accommodate the pixel values of the whole image array, and the raw pixel values of the input image being processed through the plurality of processing blocks in sub-arrays having fractional dimensions of the pixel dimensions of the whole image array, the sub-arrays including an input sub-array of pixel values being loaded from said external RAM for defining a working window that scans by successive shifts the whole image array;
the sub-arrays of raw pixel values having a row-wise dimension of either a full row or of a fraction of a full row of the input image, and a column-wise dimension equal to or larger than a column-wise filtering action of a respective processing block to which the input sub-array is input; and
said digital signal processor outputting either one or more full rows, or one or more fractions of full rows of completely reconstructed pixel values of the input image for storing in said external RAM.

2.    A software implemented image generating pipeline according to Claim 1, wherein a full row or fraction of a full row of the pixel values of the input image is on a row of the data cache in said digital signal processor.

3.    A software implemented image generating pipeline according to Claim 2, wherein successive loadings of new rows or portions of new rows in the sub-arrays is performed by overwriting the pixel values of the rows or the portions of the rows to be discarded without shifting all of the input image array data, but by inter-exchanging pointer values of a plurality of pointers to the row positions of the input image array.

4.    A software implemented image generating pipeline according to Claim 3, wherein the column-wise filtering action of a first processing block in said digital signal processor has a column-wise dimension of five columns, and the sub-array of pixel values loaded from said external RAM has a column-wise dimension of six columns.

**5.** An image generating pipeline comprising:

a digital signal processor for implementing a plurality of processing blocks connected in cascade for processing an input image comprising an array of raw pixel values to generate a color image comprising an array of reconstructed pixel values;

a memory coupled to said digital signal processor for storing the raw pixel values and the array of reconstructed pixel values;

said digital signal processor comprising a

data cache, and the raw pixel values of the input image being processed through the plurality of processing blocks in sub-arrays having fractional dimensions of the pixel dimensions of the whole image array, the sub-arrays including an input sub-array of pixel values being loaded from said memory for defining a working window that scans by successive shifts the whole image array;

the sub-arrays of raw pixel values having a row-wise dimension of at least a fraction of a full row of the input image, and a column-wise dimension equal to or larger than a column-wise filtering action of a respective processing block to which the input sub-array is input; and

said digital signal processor outputting at least one fraction of full rows of completely reconstructed pixel values of the input image for storing in said memory.

**6.** An image generating pipeline according to Claim 5, wherein said memory comprises a random access memory.

**7.** An image generating pipeline according to Claim 5, wherein the row-wise dimension of at least a fraction of a full row comprises a full row.

**8.** An image generating pipeline according to Claim 5, wherein the at least one fraction of full rows of completely reconstructed pixel values output by said digital signal processor comprises at least one full row.

**9.** An image generating pipeline according to Claim 5, wherein the data cache has a size less than a size necessary to accommodate the pixel values of the whole image array.

**10.** An image generating pipeline according to Claim 9, wherein the at least a fraction of a full row of the pixel values of the input image is on a row of the data cache in said digital signal processor.

**11.** An image generating pipeline according to Claim 10, wherein successive loadings of new rows or portions of new rows in the sub-arrays (A, B, C, D) is performed by overwriting the pixel values of the rows or the portions of the rows to be discarded without shifting all of the input image array data, but by inter-exchanging pointer values of a plurality of pointers to the row positions of the input image array.

**12.** An image generating pipeline according to Claim 11, wherein the column-wise filtering action of a first processing block in said digital signal processor has a column-wise dimension of five columns, and the sub-array of pixel values loaded from said memory has a column-wise dimension of six columns.

**13.** A method for processing an input image acquired by a digital sensor using a digital signal processor, the method comprising:

implementing a plurality of processing blocks

connected in cascade for processing the input image comprising an array of raw pixel values to generate a color image comprising an array of reconstructed pixel values;

storing the raw pixel values and the array of reconstructed pixel values in a memory coupled to the digital signal processor;

the digital signal processor comprising a data cache, and the raw pixel values of the input image being processed through the plurality of processing blocks in sub-arrays having fractional dimensions of the pixel dimensions of the whole image array, the sub-arrays including an input sub-array of pixel values being loaded from the memory for defining a working window that scans by successive shifts the whole image array;

the sub-arrays of raw pixel values having a row-wise dimension of at least a fraction of a full row of the input image, and a column-wise dimension equal to or larger than a column-wise filtering action of a respective processing block to which the input sub-array is input; and

outputting at least one fraction of full rows of completely reconstructed pixel values of the input image for storing in the memory.

**14.** A method according to Claim 13, wherein the memory comprises a random access memory.

**15.** A method according to Claim 13, wherein the row-wise dimension of at least a fraction of a full row comprises a full row.

**16.** A method according to Claim 13, wherein the at least one fraction of full rows of completely reconstructed pixel values output by the digital signal processor comprises at least one full row.

**17.** A method according to Claim 13, wherein the data cache has a size less than a size necessary to accommodate the pixel values of the whole image array.

**18.** A method according to Claim 17, wherein the at least a fraction of a full row of the pixel values of the input image is on a row of the data cache in the digital signal processor.

**19.** A method according to Claim 18, wherein successive loadings of new rows or portions of new rows in the sub-arrays is performed by overwriting the pixel values of the rows or the portions of the rows to be discarded without shifting all of the input image array data, but by inter-exchanging pointer values of a plurality of pointers to the row positions of the input image array.

**20.** A method according to Claim 19, wherein the column-wise filtering action of a first processing block in the digital signal processor has a column-wise dimension of five columns, and the sub-array of pixel values loaded from the memory has a column-wise dimension of six columns.

## FIG. 1

## FIG. 2

**FIG. 3**

**FIG. 4**

328x5

| A |

Defcor
(5 times)

324x5

| B |

Col Int1
(3 times)

320x3

| C |

Col Int2
(3 times)

318x3

| D |

Ap Corr,
Col Mat,
Gamma

316x1

| OUT |

**FIG. 5**

328x6

| A |

Defcor
(3x2 times)

324x6

| B |

Col Int1
(2x2 times)

320x4

| C |

Col Int2
(2x2 times)

318x4

| D |

Ap Corr,
Col Mat,
Gamma
(1x2 times)

316x2

| OUT |

**FIG. 6**

328x6      Defcor      326x6

| A |

Defcor
(2x2 times)

| B |

Col Int1
(2x2 times)

322x4

| C |

Col Int2
(1x2 times)

322x4

| D |

Ap Corr,
Col Mat,
Gamma
(1x2 times)

320x2

| OUT |

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5373322 A
- US 5053861 A
- US 5040064 A
- US 6642962 B
- US 6570616 B
- US 20030053687 A
- US 20030007082 A
- US 20020101524 A
- US 6366694 B
- EP 0497493 A
- EP 1176550 A
- EP 1406447 A